# EUROPÄISCHE PATENTANMELDUNG

(11) **EP 2 221 833 A1**
(43) Veröffentlichungstag der Anmeldung: **25.08.2010**
(21) Anmeldenummer: 09290084.4
(22) Anmeldetag: 04.02.2009
(51) Int. Cl.: H01B 12/16

(54) **Anordnung zur Stromversorgung von Verbrauchern elektrischen Stroms**

(71) Anmelder: Nexans, 75008 Paris (FR)
(72) Erfinder: Soika, Rainer, Dr., 30559 Hannover (DE); Stemmie, Mark, Dipl.-Ing., 30161 Hannover (DE)
(74) Vertreter: Döring, Roger

(57) **Zusammenfassung**

Es wird eine Anordnung zur Stromversorgung von Verbrauchern elektrischen Stroms mittels eines zweiphasigen Versorgungssystems, unter Verwendung eines elektrischen Kabels angegeben. Das Kabel ist als suproleitfähiges Kabel (SK) mit zwei Phasenleitern (1,3) ausgeführt, die koaxial zueinander und durch ein inneres Dielektrikum (2) voneinander getrennt zu einer Einheit zusammengefaßt sind. Es ist in einem Kryostat (KR) angeordnet, welcher aus zwei koaxial und mit Abstand zueinander verlaufenden metallischen Rohren (8,9) mit einer zwischen denselben befindlichen Vakuumisolierung (10) besteht und welcher neben dem Kabel (SK) einen Freiraum (FR) zum Durchleiten eines Kühlmittels umschließt.

## Beschreibung

Die Erfindung bezieht sich auf eine Anordnung zur Stromversorgung von Verbrauchern elektrischen Stroms mittels eines zweiphasigen Versorgungssystems, unter Verwendung eines elektrischen Kabels.

Solche Anordnungen bzw. Versorgungssysteme sind bekannt und seit Jahren weltweit im Einsatz. Dabei kann es sich beispielsweise um eine Anordnung für eine Hochspannungsgleichstromübertagung (HGÜ) handeln, für die mit zwei Kabeln ausgerüstete Übertragungselemente eingesetzt werden. Ein solches Übertragungselement ist beispielsweise ein Seekabel, das zur Überbrückung langer Strecken verwendet werden kann. Derartige Anordnungen werden aber auch in zweiphasigen Wechselstromnetzen eingesetzt, beispielsweise für die Stromversorgung elektrischer Bahnen. Die beiden Phasen eines entsprechenden zweiphasigen Versorgungssystems sind hier beispielsweise getrennt voneinander an Masten aufgehängt. Bei den bekannten zweiphasigen Versorgungssystemen treten elektrische Verluste sowie unerwünschte Spannungsabfälle auf.

Die Erfindung liegt die Aufgabe zugrunde, die eingangs geschilderte Anordnung so zu gestalten, daß sich ein einfach zu installierendes zweiphasiges Versorgungssystem mit geringen Verlusten und Spannungsabfällen ergibt.

Diese Aufgabe wird gemäß der Erfindung dadurch gelöst,
- daß das Kabel als supraleitfähiges Kabel mit zwei Phasenleitern ausgeführt ist, die koaxial zueinander und durch ein inneres Dielektrikum voneinander getrennt zu einer Einheit zusammengefaßt sind, und
- daß das Kabel in einem Kryostat angeordnet ist, welcher aus zwei koaxial und mit Abstand zueinander verlaufenden metallischen Rohren mit einer zwischen denselben befindlichen Vakuumisolierung besteht und welcher neben dem Kabel einen Freiraum zum Durchleiten eines Kühlmittels umschließt.

Diese Anordnung erlaubt bei einem zweiphasigen Wechselstromsystem eine sehr verlustarme und bei einem Gleichstromsystem eine nahezu verlustfreie Stromversorgung. Es wird dabei in bisher nicht bekannter Technik ein supraleitfähiges Kabel eingesetzt, das mit nur zwei supraleitfähigen Phasenleitern ausgerüstet ist, in Abweichung von der bisher bekannten Einleitertechnik bzw. der im Wechselstrombereich eingesetzten Dreileitertechnik. Das zweiphasige Versorgungssystem ist mit dieser Anordnung besonders einfach zu installieren, weil nur noch ein einziges Bauteil zu montieren ist, nämlich der Kryostat, in dem das supraleitfähige Kabel mit den beiden zu einer Einheit zusammengefaßten supraleitfähigen Phasen angeordnet ist. Mit dieser Anordnung hat die Fachwelt also eine einfach zu handhabende vorteilhafte Möglichkeit zum Aufbau eine zweiphasigen Versorgungssystems.

Mit besonderem Vorteil kann die Anordnung in zweiphasigen Energieverteilungsnetzen für die Stromversorgung von elektrischen Bahnen eingesetzt werden. Die Phasenspannung beträgt in Deutschland beispielsweise 110 kV. Da elektrische Bahnen in vielen europäischen Ländern mit Wechselstrom mit einer Frequenz von 16,7 Hz betrieben werden, ergeben sich gegenüber dem 50 Hz-Drehstromnetz für die allgemeine Energieversorgung zusätzlich um den Faktor "3" verminderte Wechselstromverluste.

Da die beiden koaxialen Phasenleiter des Kabels - sowohl bei Gleichstrom als auch bei zweiphasigem Wechselstrom - mit einer Phasenverschiebung von 180° betrieben werden, heben sich deren elektromagnetische Felder gegenseitig auf, so daß außerhalb der Anordnung bzw. des Kryostats keine elektromagnetischen Felder existieren.

Ein supraleitfähiges Kabel hat in heutiger Technik elektrische Leiter aus einem Verbundwerkstoff, welcher keramisches Material enthält, das bei ausreichend tiefen Temperaturen in den supraleitfähigen Zustand übergeht. Der elektrische Gleichstromwiderstand eines entsprechend aufgebauten Leiters ist bei ausreichender Kühlung Null, solange eine bestimmte Stromstärke nicht überschritten wird. Geeignete keramische Materialien sind beispielsweise ReBCO (Rear earth-Barium-Kupfer-Oxid), insbesondere YBCO (Yttrium-Barium-Kupfer-Oxid), oder BSCCO (Wismut-Strontium-Kalzium-Kupfer-Oxid). Ausreichend niedrige Temperaturen, um ein derartiges Material in den supraleitfähigen Zustand zu bringen, liegen beispielsweise zwischen 67 K und 110 K. Geeignete Kühlmittel sind beispielsweise Stickstoff, Helium, Neon und Wasserstoff oder Gemische dieser Stoffe.

Ausführungsbeispiele des Erfindungsgegenstandes sind in den Zeichnungen dargestellt.

Es zeigen:

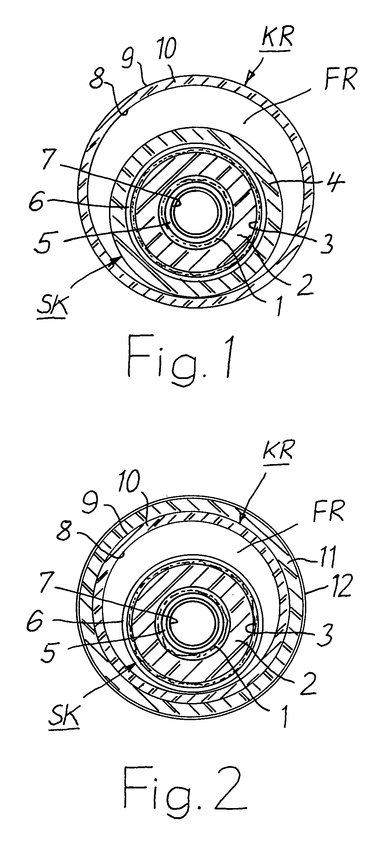

Fig. 1 und 2 Querschnitte durch zwei Kabel mit dieselben umgebenden Kryostaten in unterschiedlichen Ausführungsformen, welche für die Anordnung nach der Erfindung einsetzbar sind.

In Fig. 1 ist ein in einem Kryostat KR angeordnetes supraleitfähiges Kabel SK mit kaltem Dielektrikum dargestellt. Das Kabel SK besteht aus einem inneren Phasenleiter 1, einem denselben umgebenden inneren Dielektrikum 2 und einem dasselbe umgebenden äußeren Phasenleiter 3, über dem ein äußeres Dielektrikum 4 angeordnet ist. Die beiden Phasenleiter 1 und 3 können mit Vorteil aus YBCO oder BSSCO bestehen. Sie können durch an denselben anliegende, beispielsweise aus Kupfer bestehende Normalleiter stabilisiert sein. Dabei liegt ein innerer Normalleiter 5 innen am inneren Phasenleiter 1 an, während ein äußerer Normalleiter 6 außen am äußeren Phasenleiter 3 anliegt. Der innere Phasenleiter 1 ist - gegebenenfalls unter Zwischenschaltung des inneren Normalleiters 5 - auf einen Träger 7 mit kreisförmigem Querschnitt aufgebracht, der gemäß der zeichnerischen Darstellung vorzugsweise als Rohr ausgeführt ist. Durch das Rohr kann beim Betrieb der Anordnung ein Kühlmittel geleitet werden. Der Träger 7 kann aber auch als massiver Strang ausgeführt sein.

Der Kryostat KR besteht aus zwei metallischen Rohren 8 und 9, die konzentrisch und mit Abstand zueinander angeordnet sind. Zwischen den beiden Rohren 8 und 9 befindet sich eine Vakuumisolierung 10. Die Rohre 8 und 9 bestehen mit Vorteil aus Edelstahl und können quer zu ihrer Längsrichtung gewellt sein. Der Kryostat KR umschließt einen Freiraum FR zum Durchleiten eines Kühlmittels, in dem auch das Kabel SK angeordnet ist.

Das supraleitfähige Kabel SK nach Fig. 2 ist ein Kabel mit kaltem und warmem Dielektrikum. Der Aufbau desselben entspricht im wesentlichen dem des Kabels SK nach Fig. 1, allerdings ohne das den äußeren Phasenleiter 3 umgebende äußere Dielektrikum 4. Bei dieser Ausführungsform des Kabels SK bzw. der ganzen Anordnung ist der Kryostat KR von einem äußeren Dielektrikum 11 umgeben, über dem ein aus Isoliermaterial bestehender Mantel 12 aufgebracht sein kann.

## Patentansprüche

1. Anordnung zur Stromversorgung von Verbrauchern elektrischen Stroms mittels eines zweiphasigen Versorgungssystems, unter Verwendung eines elektrischen Kabels, **dadurch gekennzeichnet,**
- **daß** das Kabel als supraleitfähiges Kabel (SK) mit zwei Phasenleitern (1,3) ausgeführt ist, die koaxial zueinander und durch ein inneres Dielektrikum (2) voneinander getrennt zu einer Einheit zusammengefaßt sind, und
- **daß** das Kabel (SK) in einem Kryostat (KR) angeordnet ist, welcher aus zwei koaxial und mit Abstand zueinander verlaufenden metallischen Rohren (8,9) mit einer zwischen denselben befindlichen Vakuumisolierung (10) besteht und welcher neben dem Kabel (SK) einen Freiraum (FR) zum Durchleiten eines Kühlmittels umschließt.

2. Anordnung nach Anspruch 1, **dadurch gekennzeichnet, daß** der außen liegende Phasenleiter (3) von einem an demselben anliegenden äußeren Dielektrikum (4) umgeben ist.

3. Anordnung nach Anspruch 1, **dadurch gekennzeichnet, daß** der Kryostat (KR) von einem außen an demselben anliegenden äußeren Dielektrikum (11) umgeben ist.

4. Anordnung nach einem der Ansprüche 1 bis 3, **dadurch gekennzeichnet, daß** jeder der beiden Phasenleiter (1,3) durch einen an demselben anliegenden Normalleiter (5,6) stabilisiert ist.

## Geänderte Patentansprüche

### Geänderte Patentansprüche gemäss Regel 137(2) EPÜ.

**1.** Verwendung eines zweiphasigen supraleitfähigen Kabels (SK) als Stromversorgungskabel in zweiphasigen Energieverteilungsnetzen von elektrischen Bahnen, welches zwei Phasenleiter (1,3) aufweist, die koaxial zueinander angeordnet und durch ein inneres Dielektrikum (2) voneinander getrennt sind, und welches in einem Kryostat (KR) angeordnet ist, der aus zwei koaxial und mit Abstand zueinander verlaufenden Rohren (8,9) mit einer zwischen denselben befindlichen Vakuumisolierung (10) besteht und der neben dem Kabel (SK) einen Freiraum (FR) zum Durchleiten eines Kühlmittels umschließt, wobei über dem außen liegenden Phasenleiter (3) des Kabels (SK) ein äußeres Dielektrikum (4,11) angebracht ist.

**2.** Verwendung eines Kabels nach Anspruch 1, **dadurch gekennzeichnet, daß** das äußere Dielektrikum (4) am außen liegenden Phasenleiter (3) anliegt.

**3.** Verwendung eines Kabels nach Anspruch 1, **dadurch gekennzeichnet, daß** das äußere Dielektrikum (11) außen am Kryostat (KR) anliegt.

**4.** Verwendung eines Kabels nach einem der Ansprüche 1 bis 3, **dadurch gekennzeichnet, daß** jeder der beiden Phasenleiter (1,3) durch einen an demselben anliegenden Normalleiter (5,6) stabilisiert ist.
